# EUROPEAN PATENT APPLICATION

(11) **EP 2 706 491 A1**
(43) Date of publication of application: **12.03.2014**
(21) Application number: 13182656.2
(22) Date of filing: 02.09.2013
(51) Int. Cl.: G06Q 10/10

(54) **Meetings and events coordinating system and method**

(30) Priority: 10.09.2012 IL 22186812
(71) Applicant: Meushar, Dana, 69671 Tel Aviv (IL); Meushar, Sharon, 69671 Tel Aviv (IL)
(72) Inventor: Meushar, Dana, 69671 Tel Aviv (IL); Meushar, Sharon, 69671 Tel Aviv (IL)
(74) Representative: Becker Kurig Straus

(57) **Abstract**

The invention relates to a method for dynamic scheduling services and coordinating between calendars in a confidential manner without the need to share calendars content between users or participants, comprising the steps of:
a. dividing each calendar into time cubes such that each calendar is represented as a chronological sequence of uniform time scales;
b. defining each time cube on each specific calendar according to one of the following availability states: free, occupied or pending and according to location and to a level of importance as given by a calendar's owner to time cubes that are stated as occupied/pending by allowing users to set a level of importance to each scheduled event;
c. allowing a user to send data representing an invitation to an event to one or more contacts for approval, and when an invitation of one or more contacts has been approved, opening a secure "private room" in a meeting and event coordinating server that is adapted for synchronizing between users' calendars in a confidential and anonymous manner without using any calendaring content except the availability status of each user, whether it free, occupied or pending, location and level of importance as given by a calendar's owner to time cubes that are stated as occupied or pending, and importing to said "private room" the schedule of each approved contact in a confidential manner, such that each schedule of each contact includes data representing only their availability states, location and level of importance as given by a calendar's owner to time cubes that are stated as occupied or pending, wherein all approved contacts including said user are defined as attendees of said event;
d. at said secured "private room", searching all imported schedules simultaneously to find at least one option of common available matching time cubes among all attendee that defined as "free" state, or sequence or other combinations of "free" state time cubes between all attendees, or sequence of "occupied / pending" state time cubes that were graded by the calendar owner with lower level of importance than the current event that can be rescheduled, and considering all terms as given by said attendees and the data of said event, including time differences between all attendees and approximated traveling time of each attendee; and
e. setting the matched time cubes as occupied, either automatically or after being approved by said attendees, including the proximate traveling time to the meeting / event for each attendee.

## Description

### Field of the Invention

The present invention relates to the field of calendaring system. More particularly, the invention relates to a method and system for dynamic scheduling services by synchronizing calendars in a confidential and anonymous manner without the need of sharing calendars content with other users.

### Background of the invention

In today's world, the social networks are very developed and appreciated, but, somehow the basic function of meeting was left behind. With all today's technology we find it so hard to set an event / meeting/ date/ appointment, not mentioning group meetings of multi-participants events (such as parties, weddings, birthdays, religious ceremonies and the like).

How many times a day did you found yourself with wasted time out of trying to synchronize your schedule with your work Co-workers / clients / friends / partner/ children etc.? Canceled meetings which create empty windows on your schedule and delaying your home arrival time? How important is the ability to have a dynamic scheduling service which will schedule and reschedule events according to their priority and will consider estimated time to arrive to the event's location? How many businessmen do not have secretary services, and even if they do have that privileged what happens when they are at home disconnected with their tomorrow's schedule? Why should an individual use several tools and calendars to define his working hours activities from his personal/ private activities instead of receiving one scheduling services through all the aspects of his life? How many times have you been needed a potential venue list for your events/ tasks/ meetings? How many times a day have you heard or used the sentence "When can we meet?" With all recent technology, why shouldn't we enjoy artificial intelligence solution for scheduling services performing as closes to a human secretarial service?

As more users are connected to the Internet and conduct their daily activities electronically, the time asset of each user can become much more efficient. Therefore, it is an object of the present invention to provide a system which is capable of connecting between users in order to save and organized user's most expensive asset - time, in a confidential and dynamic manner, without the need of sharing calendars with other users.

Other objects and advantages of the invention will become apparent as the description proceeds.

### Summary of the Invention

The present invention relates to a method for coordinating between calendars in a confidential and dynamic manner without the need to share calendars between users or participants, comprising the steps of:
a. dividing each calendar into time cubes such that each calendar is represented as a chronological sequence of uniform time scales;
b. defining each time cube on each specific calendar according to one of the following availability states: free, occupied or pending and according to location and to a level of importance as given by a calendar's owner to time cubes that are stated as occupied/pending by allowing users to set a level of importance to each scheduled event;
c. allowing a user to send data representing an invitation to an event to one or more contacts for approval, and when an invitation of one or more contacts has been approved, opening a secure "private room" in a meeting and event coordinating server that is adapted for synchronizing between users' calendars in a confidential and anonymous manner without using any calendaring content except the availability status of each user, whether it free, occupied or pending, location and level of importance as given by a calendar's owner to time cubes that are stated as occupied or pending, and importing to said "private room" the schedule of each approved contact in a confidential manner, such that each schedule of each contact includes data representing their availability states, location and level of importance as given by a calendar's owner to time cubes that are stated as occupied or pending, wherein all approved contacts including said user are defined as attendees of said event;
d. at said secured "private room", searching all imported schedules simultaneously to find at least one option of common available matching time cubes among all attendee that defined as "free" state, or sequence or other combinations of "free" state time cubes between all attendees, or sequence of "occupied / pending" state time cubes that were graded by the calendar owner with lower level of importance than the current event that can be rescheduled, and considering all terms as given by said attendees and the data of said event, including time differences between all attendees and approximated traveling time of each attendee, prioritizing meetings with higher level of importance in the context of setting time of the event; and
e. setting the matched time cubes as occupied, either automatically or after being approved by said attendees, including the proximate traveling time to the meeting / event for each attendee.

According to an embodiment of the invention, each schedule of each contact includes data representing their availability states, the level of importance given by each of the attendees' to the specific event comparing to other events scheduled on their calendars, location of the event and location of other previous events scheduled on their calendar in the aspect of the proximate traveling time requires to each attendee to arrival the event from previous scheduled event's location, differences in time zones between the attendees and / or the meeting venue.

According to an embodiment of the present invention, the method further comprises allowing each user to set a level of importance to each event. Additionally, the method further comprises importing the level of importance given by the calendar's owner to time cubes that are stated as occupied. Moreover, the method further comprises allowing prioritizing events in the calendar according to their level of importance, whenever there is a time conflict between two or more events, by postponing the less important event and rescheduling it to other time.

According to an embodiment of the present invention, the matching considering time zone differences and the required travelling time for each attendee either from the previous event's location or according to location provided from location services or by the user will be considered when offering potential scheduling time for event.

According to an embodiment of the invention, the method further comprises providing means to clear the entire day from meetings/events and optionally have them all rescheduled by the system.

According to an embodiment of the invention, the method further comprises providing an option for the user to add remark that occurs at a certain time, but does not affect the user's schedule.

According to an embodiment of the invention, the method further comprises providing an option to send task(s) to one or more contacts of the user, wherein the task can be added (either automatically or upon approval) to the calendar of said contact(s). For example, creating such a send task can be posted as a time based remark to the user's calendar. The method further comprises providing potential time / dates and venue to perform the task. The method further comprises providing the user with more than one option to handle his tasks, e.g., such as through his scheduled time for the task on his calendar, or via a task list on his inbox. These two exemplary options or any other way to handle the tasks can be simultaneously updating each other, either automatically or upon a user approval.

According to an embodiment of the invention, the method further comprises applying with one or more optional meeting time for the event, wherein the availability state of the optional time sequences will be displayed on the calendar of each user such that the optional time cubes will be marked on the calendar (the state of the optional time cube can be either free, pending or occupied with low level of importance) and will allow the user to choose one of the offered matching options, wherein in case there are two or more event that are scheduled at the same time period, the system will alert the user, and either by the user approval or automatically the system will reschedule the less important event.

The method may further provide an "earliest choice" button for allowing the user to easily select the earliest time sequence that matches all the information, terms and limitations of the event and its attendees, considering the proximate traveling time needed for each attendee to arrive to the location of the new event from previous scheduled event location or according to location information provided by the user or by location services of a user's mobile device, and by prioritizing events with higher level of importance as graded by the user to optimized finding earlier options available by rescheduling less important scheduled events as graded by the user. For example, the optional event's time may appear as marked on the user's calendar without exposing/sharing any information of the other attendee's schedule. The user will be able to choose one of the offered optional meeting time or press the "earliest choice" button to set the earliest option as the event's time.

According to an embodiment of the invention, the method further comprises offering the events' venue or a notification regarding potential benefits of businesses around the current or future location of the end user, thereby allowing to display on the calendar of each user a location based notification related to a third party entity. For example, the third party entity can be an advertiser or a commercial content provider. Context of current or future location of the end user by scheduled events on his calendar or by events the user announced willing to apply.

According to an embodiment of the invention, the method further comprises allowing a user to hide a meeting's data from the calendar, and the time of the event will appear as busy, and only by applying a password the meeting's data will be exposed.

According to an embodiment of the invention, the method further comprises allowing a user to send designed invitations to selected events, wherein said designed invitation may include visual and audible content such as images, video, sounds or any combination thereof. For example, a user may add background music to the designed invitation.

In another aspect the invention relates to a system for coordinating between users' calendars, comprising: a) a meeting coordinating server adapted for synchronizing between users' calendars in a confidential and anonymous manner via a secure "private room" without using any calendaring content except the following properties: the availability state of each user, whether it free, occupied or pending, the level of importance given to the event by each of the attendees, event location, proximate time to arrive from previous scheduled event location, the duration of the event, differences in time zones between attendees and / or the event location; and b) a dedicated application adapted for running/executing on a user's terminal unit in order to communicate and synchronize with said meeting coordinating server.

According to an embodiment of the invention, the system further comprises an advertising server for allowing one or more third party entities to provide location based content with respect to the user's calendar and current/future scheduled location(s), wherein whenever such location based content exist a notification will be displayed on the user's calendar as an icon or other relevant symbol which only represents or indicates the sector or type of the content.

### Brief Description of the Drawings

In the drawings:
- Fig. 1 schematically illustrates meetings coordinator system, according to an embodiment of the invention;
- Fig. 2 schematically illustrates an exemplary representation in a ribbon-like form of a calendar divided into time cubes, according to an embodiment of the present invention;
- Fig. 3 schematically illustrates the matching between available time cubes of several attendees considering time differences and proximate traveling time to the location;
- Fig. 4 schematically illustrates the registration of the meeting's / event's time and the traveling time as occupied on each of the attendee's calendar; and
- Figs. 5-9 schematically illustrate exemplary screen layouts of the meeting coordinator system, according to some embodiments of the present invention.

### Detailed Description of the Invention

Embodiments of the present invention are directed to methods, systems and computer products for retrieving real time availability data (free/ occupied/pending data) in a confidential and anonymous manner via an availability service for use by a requesting calendaring application's and/or a dedicated website for scheduling meetings and/or asset use with one or more meeting attendees and/or assets. Throughout this description the term "contacts" is used to indicate entities that are able to interact with the availability service of the present invention. The entities can be private users, third parties, reservation service providers, businesses, professional users, etc. For example, a private user may interact with other contacts whether they appear in his/her own contacts list or not.

The term "event" represents variety of actions or events that requires allowancing time at the end user's calendar, and may or not requires coordination with other end users calendars, therefore the present invention aims to provide an advanced technology and method solution for finding the matching time for every action / event requires the end users' time. In this context and without limitations, event may refer to a phone call, conference call, video conference, video call, meeting, conference, one person event, multi participant event, entire day event, task or any action or occurrence depending on the time.

Reference will now be made to several embodiments of the present invention(s), examples of which are illustrated in the accompanying figures. Wherever practicable similar or like reference numbers may be used in the figures and may indicate similar or like functionality. The figures depict embodiments of the present invention for purposes of illustration only. One skilled in the art will readily recognize from the following description that alternative embodiments of the structures and methods illustrated herein may be employed without departing from the principles of the invention described herein.

The terms, "for example", "e.g.", "optionally", as used herein, are intended to be used to introduce non-limiting examples. While certain references are made to certain example system components or services, other components and services can be used as well and/or the example components can be combined into fewer components and/or divided into further components.

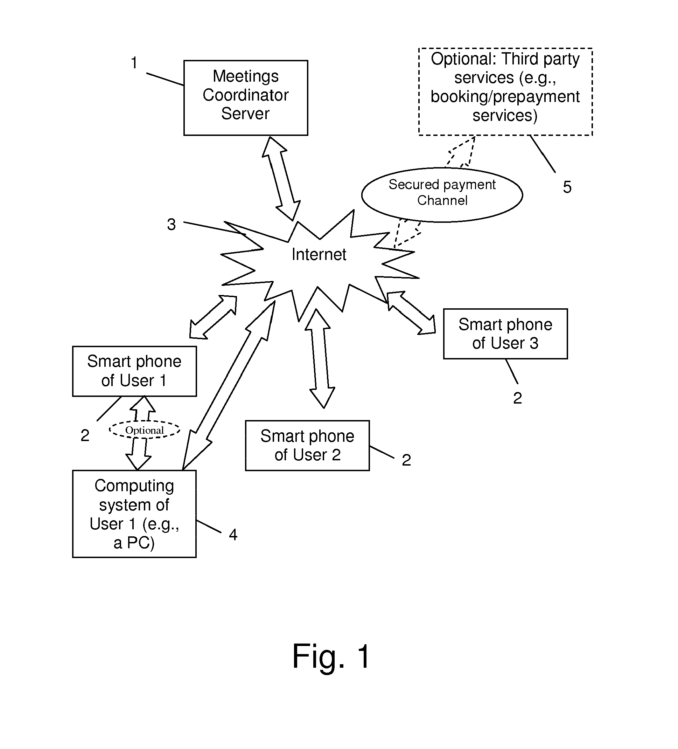

Fig. 1 and the following discussion are intended to provide a brief, general description of a suitable computing environment in which the invention may be implemented. While the invention will be described in the general context of program modules that execute in conjunction with a dedicated application program that runs on a mobile device (e.g., a smart phone) and can be companied by a dedicated website, those skilled in the art will recognize that the invention may also be implemented in combination with other program modules. Similarly, while certain examples may refer to a smart phone, other mobile devices or computer based electronic systems can be used as well, such as, without limitation, a tablet, a network-enabled personal digital assistant (PDA), a Personal Computer (PC) system and so on.

Unless otherwise indicated, the functions described herein may be performed by program modules that include executable code and instructions, which are stored in computer readable medium and running on one or more processor-based systems. However, state machines, and/or hardwired electronic circuits can also be utilized. Further, with respect to the example processes described herein, not all the process states need to be reached, nor do the states have to be performed in the illustrated order.

Generally, program modules include routines, programs, components, data structures, and other types of structures that perform particular tasks or implement particular abstract data types. Moreover, those skilled in the art will appreciate that the invention may be practiced with other computer system configurations, including hand-held devices, multiprocessor systems, microprocessor-based or programmable consumer electronics, minicomputers, and the like. The invention may also be practiced in distributed computing environments where tasks are performed by remote processing devices that are linked through a communications network. In a distributed computing environment, program modules may be located in both local and remote memory storage devices.

In addition, while certain user inputs or gestures are described as being provided via phone key presses, data entry via a keyboard, or by clicking a computer mouse, optionally, user inputs can be provided using other techniques, such as by voice or otherwise. The example screen layouts, appearance, and terminology as depicted and described herein, are intended to be illustrative and exemplary, and in no way limit the scope of the invention as claimed.

With reference to Fig. 1, one exemplary system for implementing the invention includes a meeting coordinator server 1 and plurality of terminal units capable of communicating with meeting coordinator server 1. The terminal units can be any computer based device such as smart phones 2, a Personal Computer (PC) and the like. The communicating with server 1 can be done via a dedicated application or via a dedicated website (or web interface). In a basic configuration, the server 1 includes at least one processing unit and system memory (not shown) and it can be implemented as cloud server, virtual private server, dedicated server, or any other server configuration. The system memory includes one or more dedicated software applications and may include also program data for providing calendar management services by synchronizing between users' calendars in a confidential and anonymous manner. Optionally, the system may further incorporate with terminal unit(s) of third party services 5 to be discussed in greater details below. The server 1 and the terminal units communicate via a communication network 3, such as the Internet.

According to an embodiment of the invention, each user of the system has its own private calendar that can be managed locally by the dedicated application either on a mobile device such as the smart-phone 2 or simultaneously and in synchronized manner via another computer system 4, such as a PC or a tablet. The server 1 and the dedicated application (e.g., via the user's terminal unit 2) can update each other periodically (e.g., every 15 minutes).

According to an embodiment of the invention, the dedicated application allows each user to set one or more terms in order to automatically manage the user's schedule, such as working hours, event's type (business / social ect.), daily activity hours, location (e.g. in order to take into account traveling time, for example, due to different city location and even different time zones between the attendees that are invited to the same event), reminders (e.g., to take a medicine, live sporting event, formal dress code, etc.), and the like. Once the event is scheduled, all the attendees will be defined as a meeting group of that specific event, which provides them with the ability to handle communication between all attendees with the reference of that specific event ( e.g., massages, sharing file / image, voice massage, conference call, send tasks, etc.). Therefore, the system does not require sharing calendars content among contacts or group members in order to schedule events or activities.

According to an embodiment of the present invention, the dedicated application allows the user to set the level of importance for each scheduled event (i.e., occupied time period in the user's calendar). For example, there can be at least two level of importance, such as "not important" and "very important". Therefore, in case there are two or more event that are scheduled at the same time period, the system will alert the user, and either by the user approval or automatically the system will reschedule the less important event.

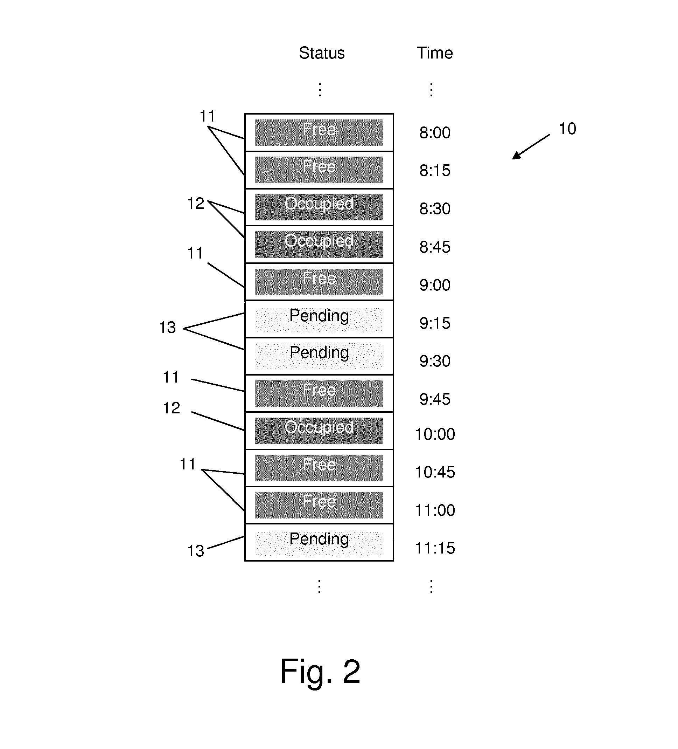

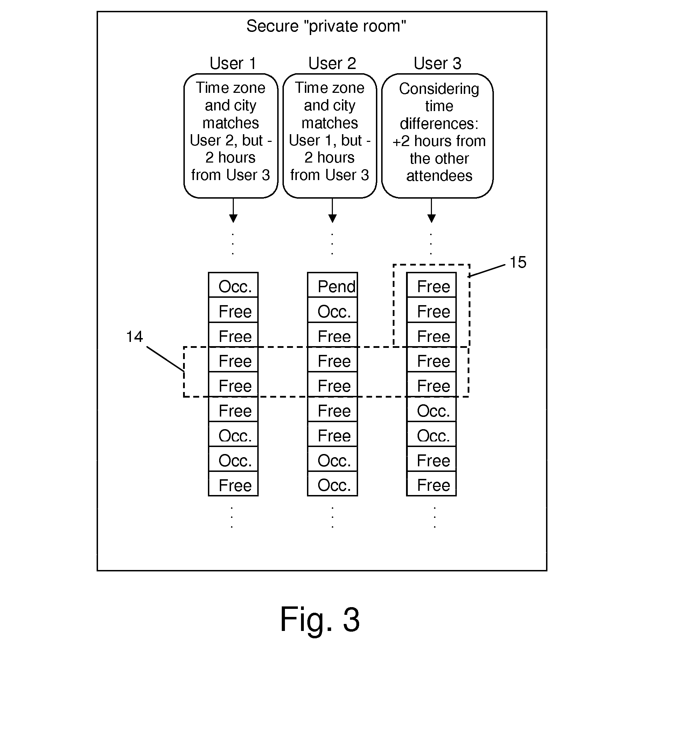

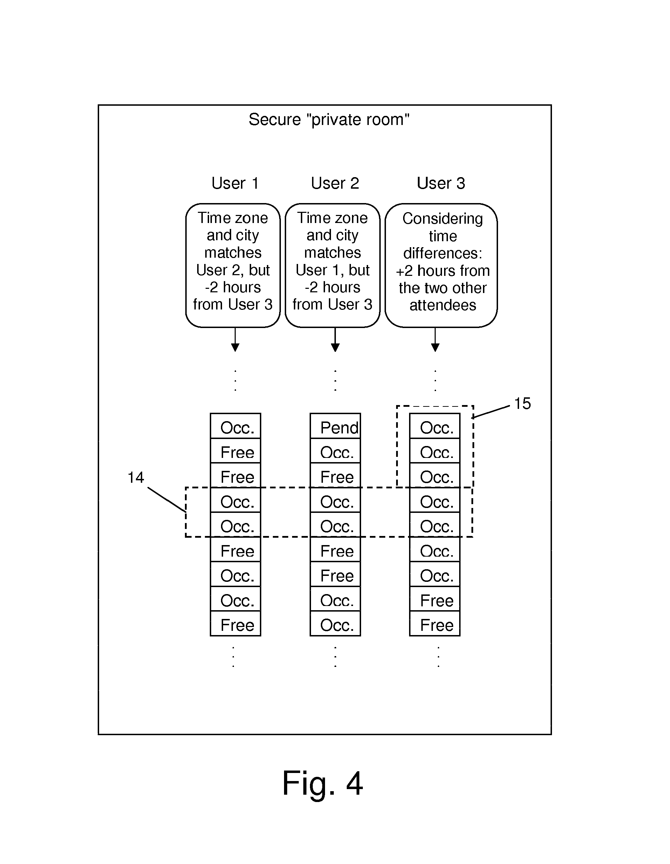

According to an embodiment of the invention, the meetings coordinating process within the server 1 involve the following steps:
- dividing each calendar into a plurality of time cubes (e.g., each time cube may represent a time period of 15 minutes) thereby providing calendars in form of a chronological sequence of uniform time scales (e.g., similar to a running ribbon as indicated by numeral 10 in Fig. 2);
- allowing to define each time cube according to one of the following statuses: free (i.e., available, as indicated by numeral 11 in Fig. 2, e.g., can be represented by a green color), occupied (i.e., busy, as indicated by numeral 12 in Fig. 2, e.g., can be represented by a red color) or pending (as indicated by numeral 13 in Fig. 2, e.g., can be represented by a yellow color). For example, by default all time cubes can be set as "free", unless otherwise defined;
- When an invitation to a specific event is approved by one or more users, opening a secure "private room" that will be used only by the system's mechanism (and it will be not shared with any user not even with the event's attendees). The system will import to this secure "private room" the schedule of each approved user (i.e., attendee) while the information on each imported schedule will be the status of each time cube (e.g., as represented by the relevant color: green, red or yellow and as shown with respect to Figs. 3 and Fig 4) Optionally, it will also import the level of importance given by each attendee to time cubes that are defied as occupied, the event's duration, the event's type if given (e.g., business / social etc.), the event's venue, previous scheduled event's location to estimate proximate arrival time of each attendee to the event's location. ;
- Then at this secured "private room", running and searching all schedules simultaneously (considering time zone differences, if relevant) to find the first or other options of available and common time cubes (or sequence or other combinations of common "free" time cubes) between all attendees and considering all terms given by attendees and the invitation/event data (e.g., the terms can be time and time differences, location, estimated traveling time of each attendee from previous event's location (e.g., in case of different time zone for different attendees, a location that requires travelling time with respect to a current location or location of a previous meeting, etc.). For example, the first available sequence of "free" time cubes for all attendees is indicated by the time cubes within the dotted line 14 in Fig. 3 with respect to the exemplary ribbon like form of the relevant calendar portion of three attendees (as indicated by the attendees: User 1, User 2 and User 3). For example, in case the travelling time of User 3 to the scheduled event with User 1 and User 2 may take several hours (e.g., due to the distance between the previous event's location of user 3 and the location of the new schedule event. In this case, while the system synchronizes the time sequence of common "free", "occupied" or "pending" time cubes between all attendees, to find matching available time or matching "occupied" / "pending" time cubes that have been prioritized as less important than the new issued event, the system takes into consideration the proximate traveling time needed for each attendee to arrive at the location of the new schedule event, and the estimated traveling time to arrive to the event's location by each of the attendees. The location information can be obtained as one of the scheduling terms either from previous event of each attendee calendar (if such event was scheduled) or based on location information provided by the user or by location services provided by the user's mobile device, e.g., GPS, cellular, and the like (e.g., as indicated by the three "free" time cubes within the dotted line 15 in Fig. 3). The three "free" time cubes within dotted line 15 represent the proximate traveling time of the attendee (e.g., User 3) to the meeting's location from his previous event's location. and
- Setting the matching time cubes as occupied (as indicated by the time cubes within the dotted line 14 in Fig. 4), either automatically or after being approved by all the relevant attendees, including setting the time period of the travelling time in the calendar of User 3 as occupied (as indicated by the time cubes within the dotted line 15 in Fig. 4), in case the event's time was scheduled on "occupied" / "pending" time cubes graded by the calendar owner as a lower level of importance, the system will reschedule the less important event, either automatically or after being approved by calendar owner.

An additional advantage provided by the invention is the ability of calculating arrival time between following meetings. This is an essential capability that directly influence on the efficiency and dynamic behavior of the system. This capability allows the system to avoid situations when the distance and arrival time required between two following meetings may critically affect the entire schedule of a specific day or other time range. With this information the system will be able to reserve a matching arrival time, or to find the date and location for the meetings that would be more appropriate. Consideration of such information, the system of the present invention becomes equipped with innovative and advanced technology capabilities.

According to some embodiments of the invention, the system further comprises software means for providing one or more optional meeting time for an event, wherein the optional time sequences will be displayed on the calendar of each user such that the optional time cubes will be marked on the calendar and will allow the user to choose one of the offered matching options each of the attendees end user will not be exposed to the other end users attendees' calendared data, the procedure of finding the potential time sequences will be handled in a confidential manner and will not be exposed to the end users attendees to protect the privacy of each of the end users attendees. Optionally, the system may further comprise software means for providing an "earliest choice" button for allowing the user to easily select the earliest time sequence that match all the information, terms and limitations of the event and it's attendees.

As will be appreciated by the skilled person the meetings coordinating process described hereinabove results in a dynamic availability services for synchronizing calendars in a confidential and anonymous manner. The synchronization is made through secured private room, not allowing anyone (not even the calendar's owners - end users) to see the schedule of the other(s) attendee(s).

The suggested system can be used as a smart secretary that provides secretarial and personal management services to the user. As will be appreciated by the skilled person, the system is able to automatically manage the user's schedule based on the user's working hours and habits, and according to locations and priorities and grads given by the user to his scheduled events and contacts.

According to some embodiments of the present invention, the system further comprises additional features and services. The more information and data the user will share and set with the system the better secretarial and personal management services he will gain, never the less the system will provide defaults settings when missed set by the user. The system may offer event's venue according to users' requests and even can provide additional information and on-line reservations from a third party entity such as flights, hotel, car rental, restaurant reservation service or any other booking and prepayment services if needed, e.g., as shown by the third party services 5 in Fig. 1. For example, this can be obtained by using and cooperating with local / global matching search engines and PayPal / credit cards payment service via a secure payment channel.

All the above will be better understood through the following illustrative and non-limitative examples.

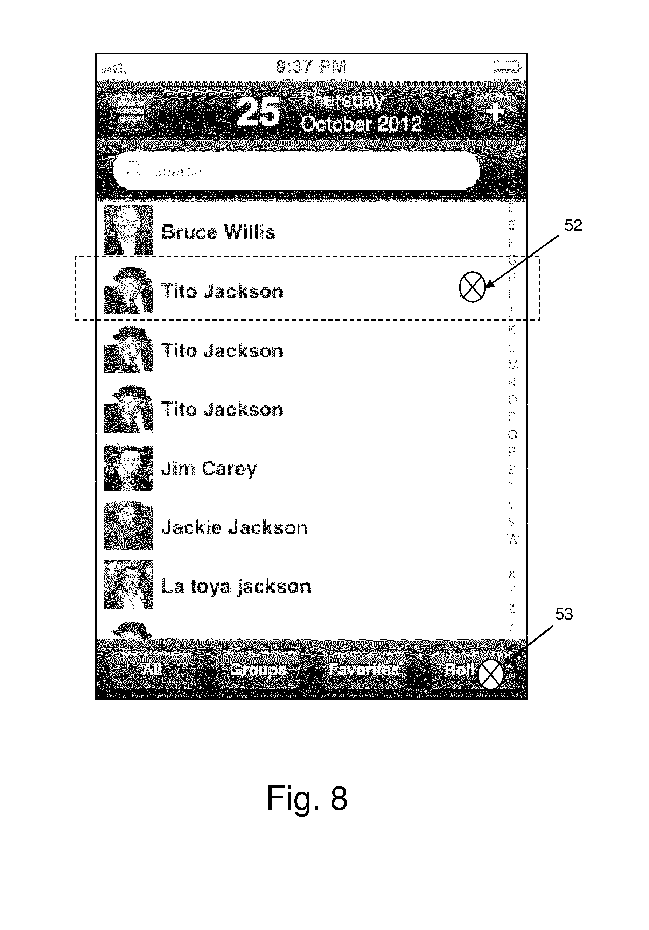

According to an embodiment of the invention, the system allows a user to define selected contacts as special role contacts, and optionally also to mark them in a unique visual manner with respect to the other contacts in the list (as indicated by numerals 52 and 53 in Fig. 8). In general, the special role contact may represent people that have specific task with respect to someone's private or professional life, such as a babysitter, a driver, a language translator, a dog walker, etc. This enables the user to set a specific role for the contact to be used when setting an event. For example, a user can define a specific contact with a special role such as a babysitter. Accordingly, whenever the user wishes to go to a specific event (e.g., a concert), the user can use the dedicated application to sync, in a confidential manner, with the babysitter's schedule (or alternatively with babysitting services) to order babysitting services in accordance with the desired event (e.g., the concert). This information is not shared with other contacts, and therefore the user can choose to update the role contact with the knowledge that he was chosen to have a special role in the users' life. According to some embodiments of the invention, in some events, the user can use the dedicated application to send the relevant meeting/event's attendees special information/request/question regarding the event (e.g., dressing code, "bring a cake" or "would you be needed a vegetarian dish?", and the like). Once the event is scheduled, all the attendees will be defined as a meeting group of that specific event. This provides them with the ability to handle communication between all attendees with the reference of that specific event (e.g., massages, sharing file / image, voice massage, conference call, video conference, video massage send tasks etc.).

According to an embodiment of the invention, the system allows the user to set limitations to a contact, such as meet intervals (e.g., meeting every two weeks), enable/disable different properties, etc. Those limitations will be taken under consideration when using the auto mechanism to set up meetings. For example, such enable/disable properties may include:
- Allow send task - will allow the specific contact to send a task to the user's calendar;
- Contact priority - this is a way to know in case there are two meetings at the same time, which to accept, which to reschedule;
- Privacy - will allow to hide data of all events and activities with that contact, in this scenario the time cubes of such scheduled events with that contact will be marked as occupied with no further data of the activity, and only by applying with correct pass code will the data be exposed;
- and
- Meeting gap - this is a roll to set in case the user wants to meet a person in gaps and not every time he wants to.

### Clear My Day (CMD)

According to an embodiment of the present invention, the user can use the dedicated application to clear the entire day from meetings/events and have them all reschedule by the system automatically (e.g., in case of emergency).

Clear my day will function as an emergency button, to provide immediate assistance by clearing the entire day from meetings and tasks and will inform all the scheduled meeting's attendees (and tasks senders) about the need to cancel or reschedule the events of that day. The system will apply the user to choose between a default of a general message or a freehanded personal message he can apply.

Clear my day option allows the user to clear the entire day from scheduled events /tasks/ meetings. Preferably, all the users that are participants in meetings during that day will be notified canceling the events by a message. For example, clear my day may load an alert with 3 options:
- Clear my day and reschedule - using the auto mechanism of the system to reschedule all events/meetings/ tasks and send messages to all relevant participants.
- **Clear my Day** - will send a message of cancelation to all participants.
- **Cancel -** close the alert and do nothing.

The dedicated application may send reminders for the user's events/ meetings with all remarks mentioned to the reference.

An additional advantage provided by the invention is that the dedicated application in accordance with meeting coordinator server help the user to organize multi participants events, schedule with all attendees, giving the user number of precipitance how approved and scheduled your event in their calendar; and to handle all their communication regarding that event through the meeting group of the event For example, the user can use the dedicated application to receive main dish preference etc.

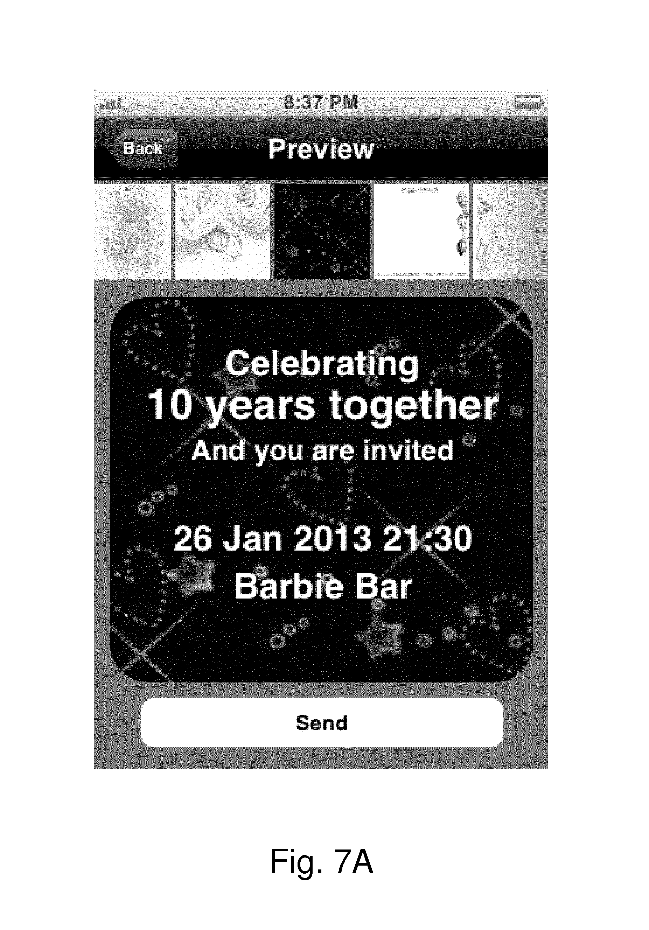

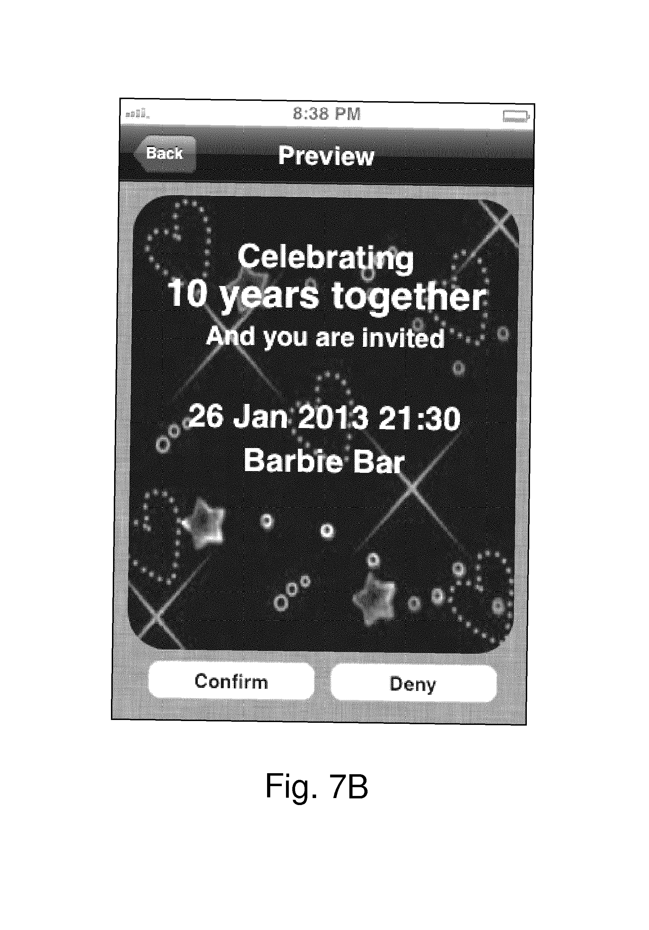

According to an embodiment of the invention, through the dedicated application a user could choose to send designed invitations (e.g., interactive, multimedia, 3D designed invitations, personalized background cover, etc.) to selected events and even to add music (e.g. ringtone/ songs/ video clip/ remix music/ play list, etc.) as background music to the invitation. Figs. 7A and 7B schematically illustrate exemplary screen layouts of such an invitation. In this example, the invitation includes a textured/designed background (e.g., an image file type such as JPG, GIF or any other suitable image / video file type), text, schedule and operation button(s) for the invited user such as "accept" / "deny" and the option to view the event's time sequence on the user's schedule before accepting or denying the invitation. Once the invited user accepts the invitation, the system will set the invitation and the scheduling to the user's calendar and, optionally, those operation buttons will be removed from the invitation. Fig. 7A shows an example of the invitation creation screen where the user may select the preferred background, fonts, etc. Fig. 7B shows the invitation as received by an invited contact of that user.

According to an embodiment of the invention, through the dedicated application a user could choose to hide a meeting's data from the calendar, and the time of the event will appear as busy, but only by applying a password the meeting's data will be exposed.

According to some embodiments of the invention, the system allows the user to choose a specific background color to each contact person or a group of contacts (e.g., different color for each private group). This color can be used as the background color of all the events related to that contact person / group on the user's calendar.

The dedicated application will help the user to follow open invitation he had sent preapproved, incoming invitations he had received, update or cancel meetings/ events. Moreover, through the dedicated application the user will be able to organize or join a group (e.g., for walking the dog shifts, purchases, school shuttle, book reading, etc.), but with the user's contacts or with other system's users having relevant attributes, e.g., such as users who live in the same city or have other common attributes.

### Groups

According to an embodiment of the invention, there are at least two types of main groups: i) private groups that the user creates like family, friends, colleagues; and ii) meeting groups that are created automatically when a meeting or event is set. The system mechanism does not require the need of sharing calendars between contacts or group members in order to schedule events.

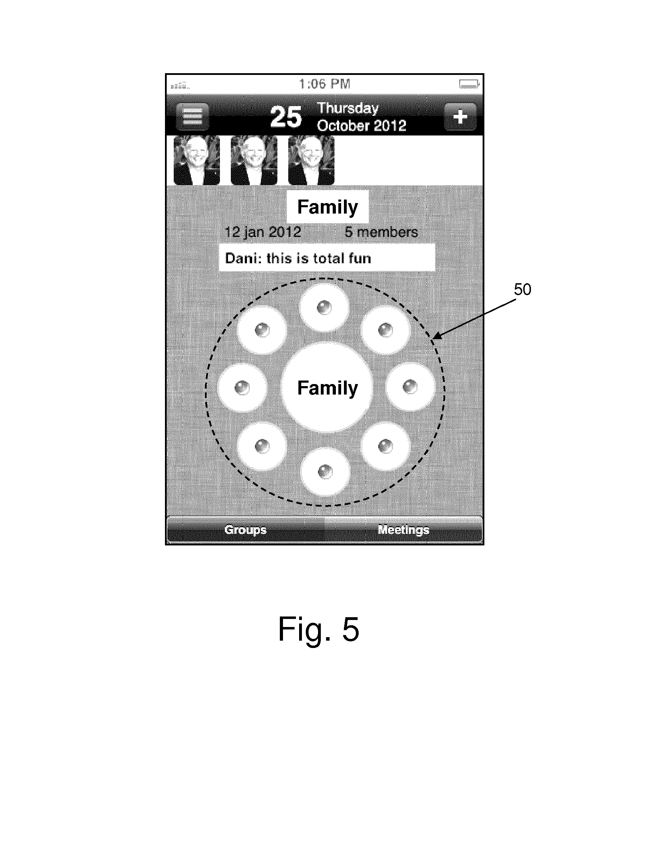

Fig. 5 schematically illustrates an exemplary screen layout of private groups, according to an embodiment of the present invention. In the center screen layout there is a dialer 50 that enables the user to navigate between all groups. In this embodiment, turning the dialer 50 left or right enables to navigate between the different groups. For example, tapping on the center of the dial will provide information regarding the currently selected group screen such as the created date of the group, the number of contacts in this group, the last post sent in this group, etc.

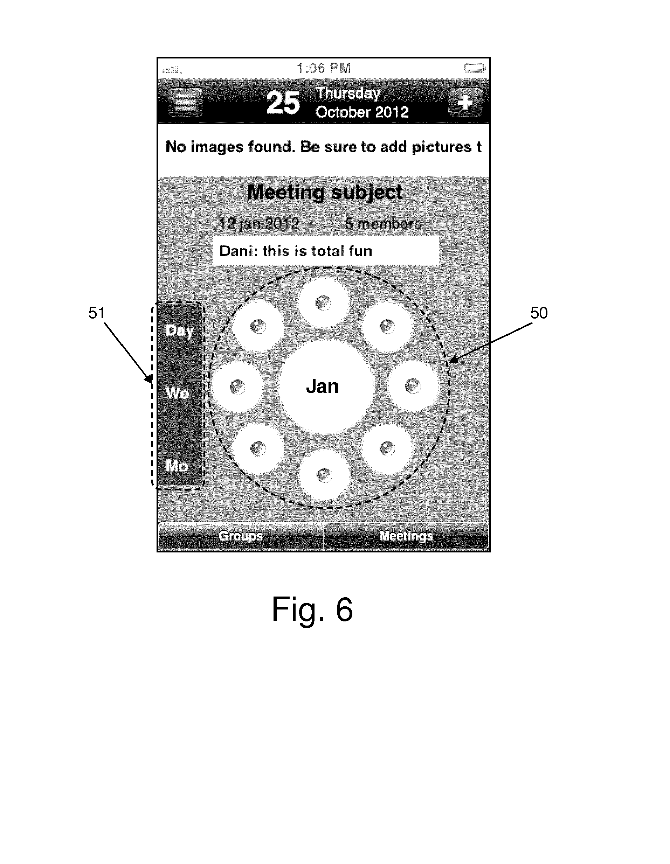

Fig. 6 schematically illustrates an exemplary screen layout of meeting groups, according to an embodiment of the present invention. The meeting groups are created automatically when a meeting is set. In this embodiment, the navigation between these groups is done in a dialer 50 like form, but with a schedule range selection 51 where the user can select the desired date range, such as day, week, month, etc.

### Time Based Remark (TBR)

TBR is an option for the user to write down something that occurs at a certain time, but does not affect his scheduled. For example: Mom went to a vacation. According to an embodiment of the invention, the TBRs will appear in the calendar but will show that time as available and will be taken under consideration as available when using the auto meeting set up mechanism.

### Send Task

According to some embodiments of the invention, the system comprises an option to send assignment(s) to one or more contacts of the user. The task can be added (either automatically or upon approval) to the calendar of that contact. Creating such a send task can be posted as a TBR to the user's own calendar. The method further comprises providing the user with two or more options to handle his tasks, e.g., through his scheduled time for the task on his calendar or via the task list on his inbox. Both options will simultaneously update each other.

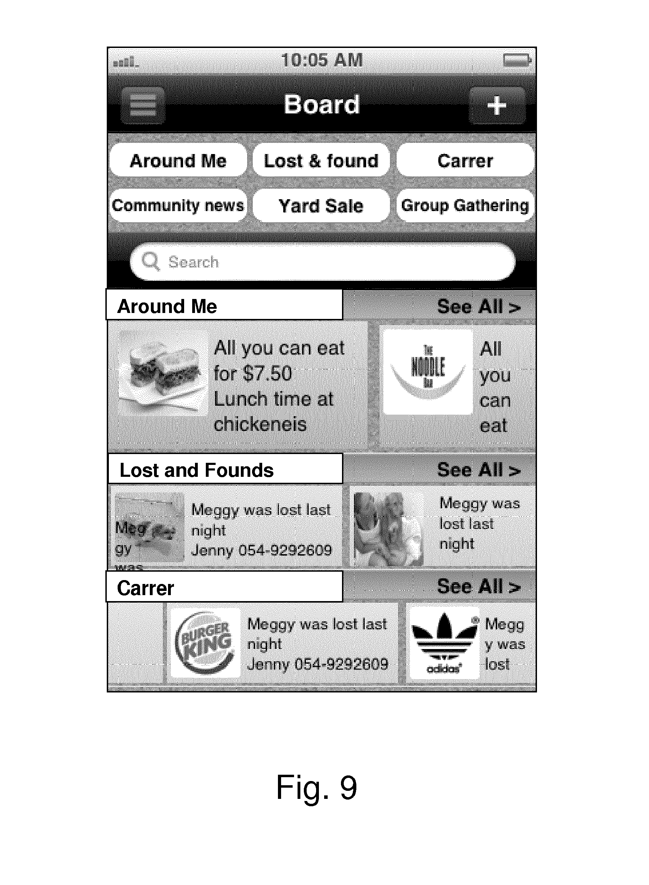

According to an embodiment of the invention, the system comprises a virtual billboard. The virtual billboard may include several categories/topics, such as places, attractions and business nearby, career opportunities, lost and found, community news, yard sale, group gathering and the like as schematically illustrated in Fig. 9. The billboard content can be either location based information (e.g., by GPS or according to scheduled meeting's locations) or non-location based information. For example, through the dedicated application each category may showcase top/selected messages (e.g., 3-5 messages on each category on each screen). Optionally, the messages can be scrolled sideways to provide unlimited ads. In selected mobile devices, there will be an option to tap and see all in order to view all messages in the specific board. Tap on a message will enlarge the message to full screen view.

### Location Based Advertisement

According to an embodiment of the invention, the system comprises a location based content module (e.g., an advertising server), or alternatively, means to communicate with a third party commercial content server, for allowing one or more third party entities to provide location based content with respect to the user's calendar and its current/future scheduled location(s). Using this service, end users will be able to choose a venue for their events.

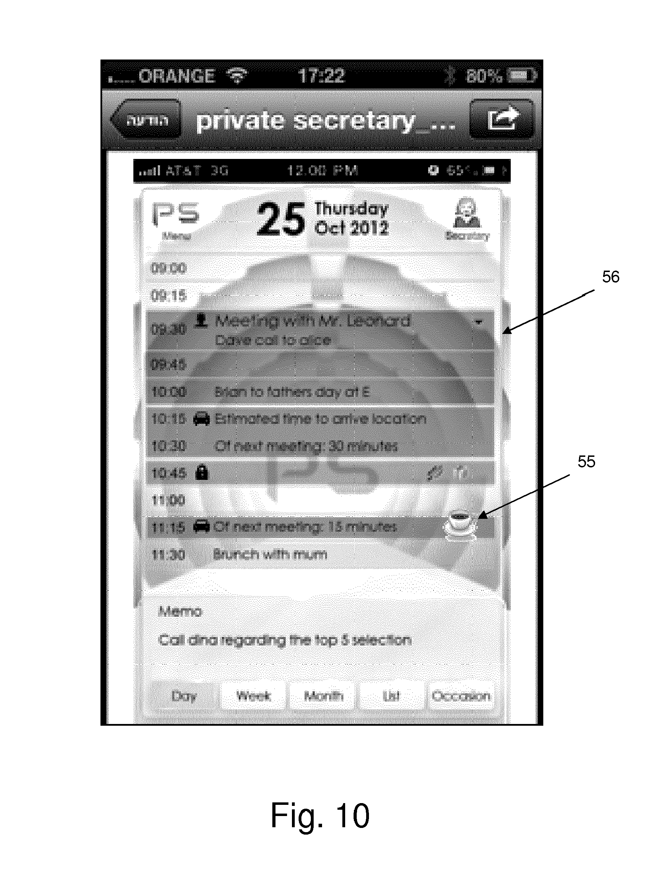

For example, whenever such location based content exist a notification will be displayed on the user's calendar as an icon or other relevant symbol which indicates or represents only the sector or type of the content, such as gastronomy sector (e.g., an icon in form of a cup of coffee that may indicate of a food related benefit such as a happy hour at a local pub or a discount at a specific restaurant), truism sector (e.g., an icon in form of the letter "i" that may represent a discount at a specific nearby hotel), culture and entertainment (e.g., an icon in form of a smiling face that may represent a discount for a sport event, a theater nearby, or movie), purchase culture (e.g., an icon in form of a shopping cart that may represent malls and shopping center nearby), transportation (e.g., an icon in form of a private car that may represent flight deals, available parking lot, car rent), etc. Fig. 10 schematically illustrates an icon 55 in form of a cup of coffee that represents the gastronomy sector as presented in the user's calendar 56.

According to an embodiment of the invention, the advertising are implemented in a manner and placements not just to avoid interference to the users working environment but even to bring the advertising to the users benefit as well to the advertiser. This is done through the concept that the system's application is an innovative way of connecting between users by considering them not only as private, social or professional individuals but all at once. Combined with the function of secretarial and private management services, the system provides with calendar management services. Through this ability, the system will offer a unique match between the advertiser to the users in the aspect of their device location detection and future event locations of the user, in a unique approach:
In this perspective, the system offers a new kind of advertisement which will, without any doubt, make the users curious and thus, increase their click probability on the ads. No more need to relate to usual terms from the advertising world such as impressions, clicks, conversions, CTR (click through rate: the relation between impressions and clicks). Showing the users geo-located thematic icons all along their way or future scheduled locations, without them to know what advertiser is hiding behind, will make stronger their will to discover what the icon is. And will create a curiosity by the user in the aspect of a "lottery ticket". For example, by clicking on these "icon" ads, a small and user friendly pop-up will open up and give the user the possibility to win and save a free gift/benefit, a coupon and the like at a nearby located business. This service offers a potential place for the events or potential location to perform their tasks via the calendar of each end user.

The user gains: a) a benefit with that relates to his current/future scheduled locations; and b) offered potential venue to his events, which answers one of the major factors and dilemmas when considering scheduling an event / task. The advertiser gains: a) a target audience per to the location near his business; b) creating curiosity through the ads that will increase the clicking frequencies and by that attract more users to view their ads; c) advertising at the suggested venue screen will be the closest advertising to "close deal". For example, if a user will choose to click on the business's ad as his meeting venue, that business will appear on the user's invitation and will be shown at all event's attendees' schedule.

The system of the present invention allows users to received / send an invitation with all meeting/ event's data, and to easily and efficiently schedule and synchronized with the user's meetings attendees in a confidential and secured manner, without sharing one end user's calendar to another, knowing that anyone can't see the other's schedule. Moreover, a user can determine whether to accept the invitation, accept it but through day / dates / hour limitations (without letting other attendees knowing of such) or decline in a gentle way.

The system of the present invention provides a sort of an artificial intelligence, where a user's calendar is dynamic and adapts itself according to user-defined changes or events, so that the already existing calendar events are subject to change constantly and immediately automatically by the system.

The embodiments described hereinabove result in a system that offers a service in which each end user will be able to coordinate events, tasks and appointments with contacts in a dynamic manner and without requiring them to disclose or share their schedule / calendar information with other end users of the system or to be exposed to other end users' schedule / calendar information. Moreover, the system enables finding potential matching dates/time in a confidential and secure manner in a dynamic way, which is not exposed to any of the end users including the event's participants or even the event creator. We emphasize that the system will offer potential dates/ time for events without exposing calendar / schedule information between end users or participants, even free / busy information is not being shared among the end users / event participants, and search results dates for a given event, will be presented to each end user on his private calendar without exposing information (not even free / busy) of the other end users / event participants.

The system of the present invention considers the user with his entire aspects of his daily life, allowing the user to manage all the activities though an advanced and dynamic scheduling mechanism. The user can define the hours of his daily activities (on what time he starts his day and when he ends is daily activity), habits (e.g., like sports habits and the like), working days and hours, location, etc. It is very important on the schedule aspect to take into consideration traveling time between activities and events, when it comes to scheduling the traveling time between chronological following events can be crucial to the performance and the ability to carry out the events on time, or to the mechanism to define the matching date and time of the meetings.

All the above description and examples have been given for the purpose of illustration and are not intended to limit the invention in any way. Many different mechanisms, methods of analysis, electronic and logical elements can be employed, all without exceeding the scope of the invention.

## Claims

1. A method for dynamic scheduling services and coordinating between calendars in a confidential manner without the need to share calendars content between users or participants, comprising the steps of:
a. dividing each calendar into time cubes such that each calendar is represented as a chronological sequence of uniform time scales;
b. defining each time cube on each specific calendar according to one of the following availability states: free, occupied or pending and according to location and to a level of importance as given by a calendar's owner to time cubes that are stated as occupied/pending by allowing users to set a level of importance to each scheduled event;
c. allowing a user to send data representing an invitation to an event to one or more contacts for approval, and when an invitation of one or more contacts has been approved, opening a secure "private room" in a meeting and event coordinating server that is adapted for synchronizing between users' calendars in a confidential and anonymous manner without using any calendaring content except the availability status of each user, whether it free, occupied or pending, location and level of importance as given by a calendar's owner to time cubes that are stated as occupied or pending, and importing to said "private room" the schedule of each approved contact in a confidential manner, such that each schedule of each contact includes data representing only their availability states, location and level of importance as given by a calendar's owner to time cubes that are stated as occupied or pending, wherein all approved contacts including said user are defined as attendees of said event;
d. at said secured "private room", searching all imported schedules simultaneously to find at least one option of common available matching time cubes among all attendee that defined as "free" state, or sequence or other combinations of "free" state time cubes between all attendees, or sequence of "occupied / pending" state time cubes that were graded by the calendar owner with lower level of importance than the current event that can be rescheduled, and considering all terms as given by said attendees and the data of said event, including time differences between all attendees and approximated traveling time of each attendee; and
e. setting the matched time cubes as occupied, either automatically or after being approved by said attendees, including the proximate traveling time to the meeting / event for each attendee.

2. A method according to claim 1, further comprises allowing to prioritize events in the calendar according to their level of importance, whenever there is a time conflict between two or more events, by postponing the less important event and rescheduling it to other time.

3. A method according to claim 1, wherein the matching considering time zone differences between attendees and event's location and the required travelling time for each attendee either from the previous event's location or according to location provided from location services or by the user.

4. A method according to claim 1, further comprising providing means to clear the entire day from meetings/events and optionally have them all reschedule.

5. A method according to claim 1, further comprising providing an option for the user to add remark that occurs at a certain time, but does not affect the user's schedule and the availability state of the time cube(s).

6. A method according to claim 1, further comprising providing an option to send task(s) to one or more contacts of the user, wherein the task can be added (either automatically or upon approval) to the calendar of said contact(s), without the need of sharing calendars between the end users.

7. A method according to claim 6, wherein creating such a send task or by creating a new time based remark can be posted as a time based remark to the user's calendar without defining that time cube as occupied.

8. A method according to claim 1, further comprises applying with one or more optional meeting time for the event, wherein the optional time sequences will be displayed on the calendar of each user without exposing or sharing other end users calendars such that the optional time cubes will be marked on the calendar including the estimated time cubes needed to arrive to the event's location from previous scheduled event's location, and will allow the user to choose one of the offered matching options, wherein in case there are two or more event that are scheduled at the same time period, the system will alert the user, and either by the user approval or automatically the system will reschedule the less important event..

9. A method according to claim 8, further comprises providing an "earliest choice" button for allowing the user to easily select the earliest time sequence that match all the information, terms and limitations of the event and it's attendees considering the proximate traveling time needed for each attendee to arrive at the location of a new schedule event from previous event location or according to location information provided by the user or by location services of a user's mobile device, and by prioritizing events with higher level of importance as graded by the user to optimized finding earlier options available by rescheduling less important scheduled events as graded by the user.

10. A method according to claim 1, further comprises allowing to display on the calendar of each user a location based notification related to a third party entity.

11. A method according to claim 10, wherein the third party entity is an advertiser or a commercial content provider.

12. A method according to claim 1, further comprises offering event's venue according to a user's request.

13. A method according to claim 12, further comprises providing additional information and on-line reservations from a third party.

14. A method according to claim 1, further comprises allowing defining selected contacts as special role contacts, and optionally marking said special role contacts in a unique visual manner with respect to the other user's contacts.

15. A method according to claim 1, further comprising allowing a user to hide a meeting's data from the calendar, and the time of the event will appear as busy, and only by applying a password the meeting's data will be exposed.

16. A method according to claim 1, further comprising allowing a user to send designed invitations to selected events, wherein said designed invitation may include images, video or sounds or any combination thereof.

17. A method according to claim 16, further comprising allowing a user to add background music to the designed invitation.

18. A system for dynamic scheduling services and coordinating between users' calendars in a confidential manner without the need to share calendars content between users or participants, comprising:
a) a meeting coordinating server adapted for synchronizing between users' calendars in a secure and anonymous manner via a secure "private room" without using any calendaring content except the availability status of each user, whether it free, occupied or pending and according to location and a level of importance as given by a calendar's owner to each scheduled event and the location of each scheduled or pending event; and
b) a dedicated application adapted for running/executing on a user's terminal unit in order to communicate and synchronize with said meeting coordinating server.

19. A system according to claim 18, further comprises an advertising server for allowing one or more third party entities to provide location based content with respect to the user's calendar and current/future scheduled location(s), wherein whenever such location based content exist a notification will be displayed on the user's calendar as an icon or other relevant symbol which only represents or indicates the sector or type of the content.
